# EUROPÄISCHE PATENTSCHRIFT

(11) **EP 1 220 743 B1**
(45) Veröffentlichungstag und Bekanntmachung des Hinweises auf die Patenterteilung: **07.05.2003**
(21) Anmeldenummer: 00969480.3
(22) Anmeldetag: 11.10.2000
(51) Int. Cl.: B29C 45/17

(54) **SPRITZGIESSMASCHINE MIT EINEM MASCHINENFUSS**
INJECTION MOULDING MACHINE WITH A MACHINE BASE
MACHINE DE MOULAGE PAR INJECTION POURVUE D'UN SOCLE

(30) Priorität: 16.10.1999 DE 19949959
(43) Veröffentlichungstag der Anmeldung: 10.07.2002
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP0009979
(87) Internationale Veröffentlichungsnummer: WO01028749

(56) Entgegenhaltungen:
- DE-A- 3 238 185
- DE-U- 9 210 274
- US-A- 2 438 856
- PATENT ABSTRACTS OF JAPAN vol. 17, no. 694 (M-1531), 17. Dezember 1993 (1993-12-17) -& JP 05 237875 A (FANUC LTD), 17. September 1993 (1993-09-17)
- PATENT ABSTRACTS OF JAPAN vol. 1995, no. 3, 28. April 1995 (1995-04-28) -& JP 06 344372 A (FANUC LTD), 20. Dezember 1994 (1994-12-20)

## Beschreibung

Die Erfindung betrifft eine Spritzgießmaschine mit einem Maschinenfuß nach dem Oberbegriff des Anspruches 1.

Eine derartige Spritzgießmaschine ist zum Beispiel durch die Selecta-Baureihe der Firma Arburg bekannt. Verschiedene Teile des Maschinenständers sind unterhalb von Formschließeinheit und Spritzgießeinheit angeordnet, die zum Betrieb der Maschine miteinander verbunden werden. Beim Einrichten der Maschine müssen jedoch die beiden Teile des Maschinenfußes unabhängig voneinander einnivelliert werden, was einen gewissen Montageaufwand erfordert Erfolgt keine entsprechende Justage, können sich Ungenauigkeiten beim Betrieb der Spritzgießmaschine ergeben, die auch die Qualität der Spritzgießteile negativ beeinflussen.

Aus der AT 381 273 B ist es bekannt, einen Maschinenständer aus Stahlblechstanzstücken zu formen und zu verschweißen. Ein derartiger Maschinenfuß ist zwar den an die Stabilität zu stellenden Anforderungen gewachsen, allerdings ergeben sich mit zunehmender Größe der Maschine Bearbeitungsprobleme allein dadurch, dass auch Bearbeitungszentren an bestimmte Baugrößen gebunden sind. Somit ist zwar eine Justage unterschiedlicher Teile bei einem derartigen Maschinenfuß nicht erforderlich, jedoch kann ab einer bestimmten Größe ein Maschinenfuß nicht mehr allein auf diese Weise hergestellt werden.

Ausgehend von diesem Stand der Technik liegt der vorliegenden Erfindung die Aufgabe zugrunde, eine Spritzgießmaschine der eingangs genannten Gattung mit einem Maschinenfuß zu versehen, der leicht einzurichten ist und dennoch den Anforderungen gerecht wird, die beim Betrieb der Spritzgießmaschine bestehen.

Diese Aufgabe wird durch eine Spritzgießmaschine mit den Merkmalen des Anspruches 1 gelöst.

Der Maschinenfuß besitzt mehrere Teile, die unterhalb des stationären Formträgers mit diesem unabhängig voneinander verbindbar sind. Damit gibt der stationäre Formträger den Punkt vor, um den herum der Maschinenfuß zu nivellieren ist. Die Aufteilung hat insbesondere bei größeren Maschinen den Vorteil, dass zu einem späten Zeitpunkt während der Produktion eine Entscheidung für einen größeren oder kleineren Teilfuß vor allem im Hinblick auf die Spritzgießeinheit erfolgen kann. Ganz nach den Anforderungen des Kunden kann der Maschinenfuß an die jeweiligen Bedürfnisse angepasst werden, was sich auch in den Kosten der gesamten Maschine bemerkbar macht Dennoch können Kräfte zuverlässig dort eingeleitet werden, wo es nötig ist, nämlich im Übergangsbereich zwischen stationärem Formträger und Spritzgießeinheit.

Weitere Vorteile ergeben sich aus den Unteransprüchen.

### Kurzbeschreibung der Figuren

Im folgenden wird die Erfindung anhand eines Ausführungsbeispiels näher erläutert. Es zeigen:
- Fig. 1: Eine Vorderansicht der Spritzgießmaschine,
- Fig. 2: die Teile des Maschinenfußes mit dem abgenommenen stationären Formträger zur Verdeutlichung der Schnittstellen,
- Fig. 3: einen vergrößerten Ausschnitt aus Fig. 2.

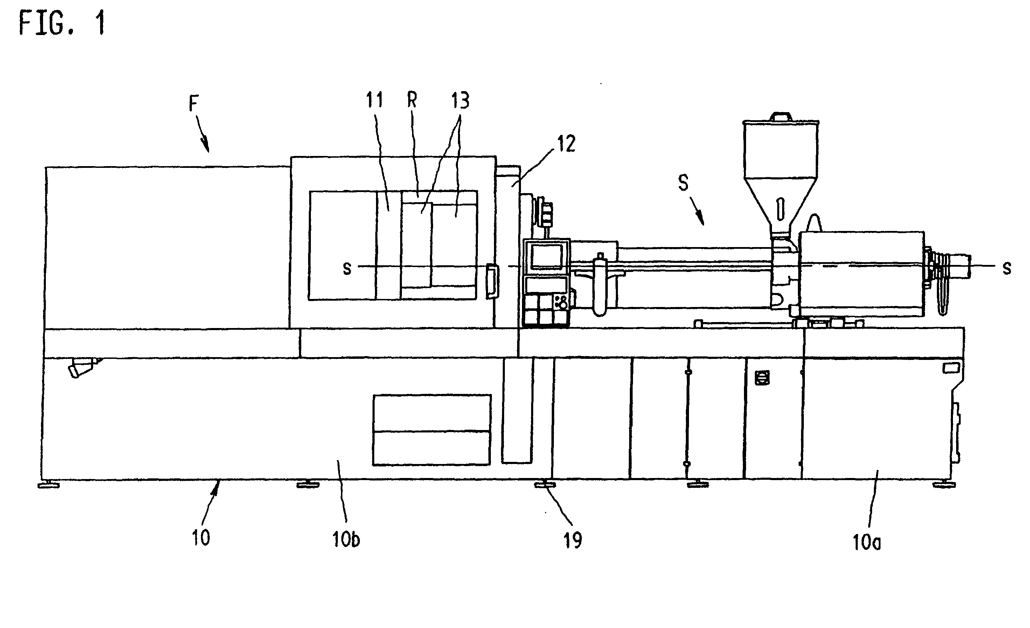

Figur 1 zeigt in einer Ansicht von vome eine Spritzgießmaschine zur Verarbeitung von Kunststoffen und anderer plastifizierbarer Massen wie z.B. keramische oder pulvrige Massen. In üblicher Bauweise besitzt die Spritzgießmaschine auf einem Maschinenfuß 10 eine Formschließeinheit F sowie eine Spritzgießeinheit S. In der Spritzgießeinheit S werden die plastifizierbaren Massen plastifiziert und dann in einen Formhohlraum einer Spritzgießform 13 eingespritzt. Diese Spritzgießform ist zwischen einem beweglichen Formträger 11 und einem stationären Formträger 12 in einem Formspannraum R aufgenommen. Plastifizieren und Einspritzen der plastifizierbaren Massen erfolgen entlang einer Spritzachse s-s der Spritzgießeinheit S.

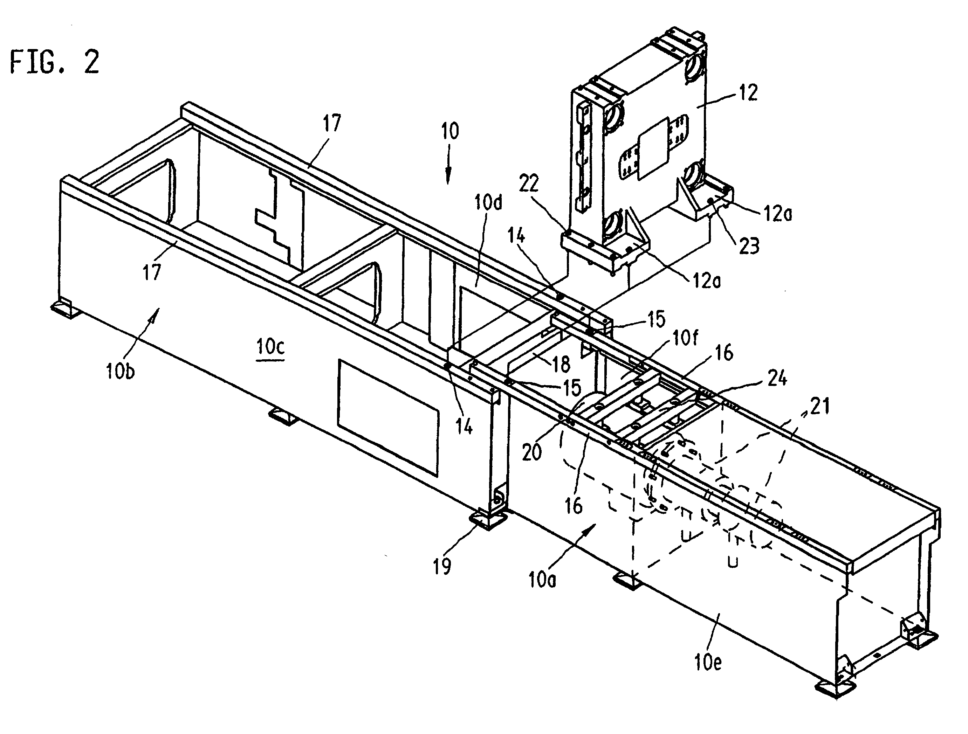

Der Maschinenfuß 10 besitzt im Betriebszustand wenigstens zwei nebeneinander stehende Teile 10a, 10b. Über dem einen Teil 10a ist die Spritzgießeinheit angeordnet, während über dem anderen Teil 10b die Formschließeinheit angeordnet ist. Der stationäre Formträger 12 ist im Ausführungsbeispiel an dem anderen Teil 10b des Maschinenfußes befestigbar. Gemäß Fig. 2 sind die Teile 10a,10b des Maschinenfußes 10 unterhalb und in der Vertikalprojektion zumindest des Fußes 12a des stationären Formträgers 12 mit diesem unabhängig voneinander verbindbar. Dadurch können die Teile gesondert gefertigt und während der Montage miteinander verbunden werden. Diese Verbindung kann erst zu einem späten Zeitpunkt des Herstellungsprozesses erfolgen, so dass die Teile zwar vorgefertigt werden können, aber dennoch auf Kundenwunsch insbesondere der spritzgießseitige eine Teil 10a des Maschinenfußes an die jeweiligen Anforderungen angepasst werden kann. Da die Größe der Spritzgießeinheit stark davon abhängt, welches Material verarbeitet wird und welche Teile hergestellt werden sollen, kann diese in ihrer Größe stark schwanken. Hieran kann - auch aus Kostengründen - der Maschinenfuß leicht angepasst werden. Durch die im Übergangsbereich zwischen den beiden Teilen 10a,10b des Maschinenfußes 10 erfolgende Verbindung durch den stationären Formträger, der selbst verhältnismäßig steif ausgebildet ist, wird sozusagen ein Ruhepunkt geschaffen, um den herum die Teile des Maschinenfußes im wesentlichen unabhängig voneinander ausgerichtet werden können.

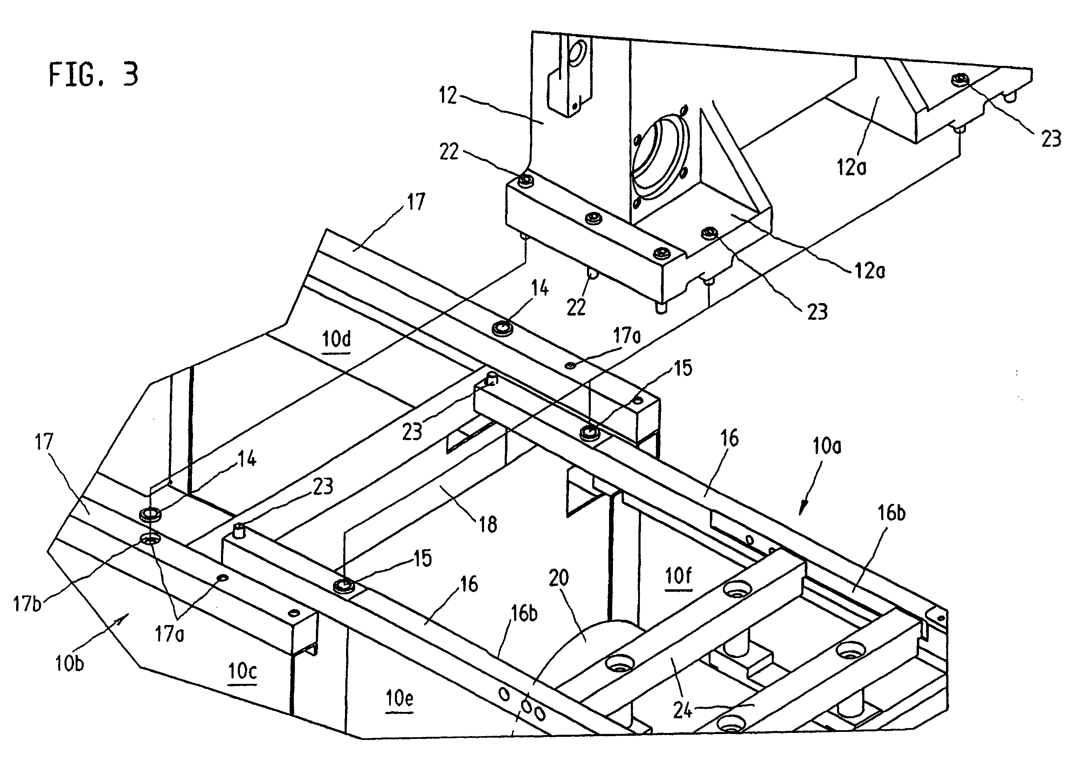

Die Verbindung des spritzgießseitigen einen Teils 10a und des formschließseitigen anderen Teils 10b des Maschinenfußes erfolgt vorzugsweise über je zwei quer zur Spritzachse s-s angeordnete Zentrierelemente 14,15. Eine Beschränkung auf jeweils nur zwei Zentrierelemente hat den Vorteil, dass zwei Punkte eine Gerade bestimmen, so dass in Verbindung mit dem stationären Formträger damit eine "Gelenkachse" zum leichteren Nivellieren der beiden Maschinenständer zueinander gegeben ist. Fig. 3 zeigt, dass die Zentrierelemente 14 für das andere Teil 10b des Maschinenfußes mit dem stationären Formträger 12 über die Befestigungsmittel 22 sowie die Zentrierelemente 15 für das eine Teil 10a des Maschinenfußes mit dem stationären Formträger 12 mittels der Befestigungsmittel 23 jeweils parallel zueinander angeordnet sind. Femer liegen die durch die Zentrierelemente 14,15 gegebenen Geraden quer, vorzugsweise im rechten Winkel zu einer durch die Spritzachse s-s gelegten vertikalen Ebene.

Es wird vom Hersteller sichergestellt, dass sich eine leichte Nivelliermöglichkeit um die dadurch gegebenen Achsen ergibt. Die Zentrierelemente 14,15 selbst liegen etwa über den voneinander beabstandeten Längswänden 10c,10d des anderen Teils 10b bzw. über den Längswänden 10e,10f des einen Teils 10a des Maschinenfußes 10. Das eigentliche "Verbindungsmittel" ist damit der stationäre Formträger 12, wobei nur sichergestellt sein muss, dass beide Teile 10a,10b des Maschinenfußes zumindest innerhalb der Vertikalprojektion des Fußes bzw. der Füße 12a des stationären Formträgers 12 enden bzw. liegen.

Gemäß Fig. 2,3 ist der die Spritzgießeinheit S tragende eine Teil 10a schmaler als der die Formschließeinheit F tragende andere Teil 10b. Auf beiden Teilen 10a,10b des Maschinenfußes sind Lagerschienen 16,17 zur Lagerung von Spritzgießeinheit S und Formschließeinheit F vorgesehen. Selbstverständlich können auch andere Lagerschienen für den im folgenden beschriebenen Zweck an geeigneter Stelle angeordnet sein. Gemäß Fig. 3 überragen die Lagerschienen 16 des einen Teils 10a diesen Teil in Richtung auf den anderen Teil 10b. Die Lagerschienen 16 des einen Teils 10a kommen im Betriebszustand zwischen den Lagerschienen 17 des anderen Teils 10b in einem Aufnahmeraum 18 zu liegen. Gemäß Fig. 1,2 ist der eine Teil 10a über den stationären Formträger 12 mittelbar so mit dem anderen Teil 10b verbunden, dass sich beide Teile im Bereich des stationären Formträgers 12 gemeinsam auf den Standfüßen 19 des anderen Teils 10b abstützen.

Vorzugsweise erfolgt die Montage so, dass zunächst ein Teil des Maschinenfußes einjustiert wird und dieses mit dem stationären Formträger 12 verbunden wird. Dann wird in dieser damit vorjustierten Montageeinheit der andere Teil des Maschinenfußes befestigt, so dass dieser leicht einjustierbar ist. Zunächst wird also der andere Teil 10b des Maschinenfußes 10 aufgestellt und eingerichtet bzw. nivelliert wird. Auf diesen Teil wird der stationäre Formträger 12 angebracht. Diese Anbringung erfolgt dadurch, dass der stationäre Formträger 12 mit seinen Füßen 12a auf die Lagerschienen 17 gesetzt wird. Dabei wird die Verbindung unter Zwischenschaltung der Zentrierelemente 14 durch die Befestigungsmittel 22 geschaffen. Liegen die Zentrierelemente 14 fest, werden die restlichen Befestigungsmittel 22 in den weiteren Bohrungen 17a befestigt. Die so geschaffene Montageeinheit ist damit im Hinblick auf das andere Teil 10b des Maschinenfußes eingerichtet. Zwischen dem stationären Formträger 12 und dem anderen Teil 10b bildet sich dabei ein Aufnahmeraum 18 aus, in den die Lagerschienen 16 des einen Teils 10a des Maschinenfußes eingeführt werden können. Um die Verbindung an der gewünschten Stelle zu erreichen, besitzt die Lagerschiene 16 ebenfalls Aufnahmen, die z.B. mit dem Befestigungsmittel 23 in zeichnerisch nicht dargestellte Ausnehmungen der Füße 12a des stationären Formträgers 12 eingreifen. Die Befestigung des einen Teils 10a des Maschinenfußes am stationären Formträger 12 erfolgt über die Zentrierelemente 15 in Verbindung mit den Befestigungsmitteln 23. Durch die Anlage am stationären Formträger ergibt sich zunächst eine Grobeinrichtung des einen Teils 10a, da jedoch die weitere Bewegung um die durch die Zentrierelemente 15 gebildete Achse erfolgt, kann der Maschinenfuß leicht nivelliert und justiert werden. Die vorzugsweise unter dem stationären Formträger 12 paarweise parallel, quer zum Maschinenfuß angeordneten Zentrierelemente führen so zu eindeutigen Bewegungsachsen, so dass ein weiteres Nivellieren des Maschinenfußes nur noch in der dritten Dimension erforderlich ist. Anschließend erfolgt der weitere Aufbau der Spritzgießmaschine, bis sich ein Bild gemäß Fig. 1 ergibt.

Die je nach Kundenwunsch unterschiedliche Baulänge des einen Teils 10a des Maschinenfußes hat zur Konsequenz, dass der Schwerpunkt der Maschine sich ebenfalls in Abhängigkeit dieses Maschinenfußes verändert. Gleichzeitig ist die Formschließeinheit im Vergleich zur Spritzgießeinheit verhältnismäßig schwer. Daher werden der Antriebsmotor 20 und vorzugsweise auch die vom Antriebsmotor angetriebenen Pumpeinheiten 21 der Formschließeinheit F als auch der Spritzgießeinheit S unterhalb der Spritzgießeinheit in dem einen Teil 10a des Maschinenfußes angeordnet und damit unter die Spritzgießeinheit versetzt, so dass sich ein möglichst mittiger Schwerpunkt ergibt. Zur Montagevereinfachung wird der Antriebsmotor 20 zwischen den Lagerschienen 16 eingehängt. Gemäß Fig. 3 geschieht dies dadurch, dass die Lagerschienen 16 Aussparungen 16b aufweisen, in denen Halteelemente 24 eingehängt sind. An diesen Halteelementen ist der Antriebsmotor 20 aufgehängt. Fig. 3 zeigt, dass die Aussparungen 16b länger sind als der Abstand der beiden Halteelemente 24 zueinander. Dadurch ist es möglich, diesen Teil der Lagerschienen 16 einheitlich vorzuhalten und bedarfsweise den Antriebsmotor 20 zur Einstellung des Schwerpunktes in Richtung der Spritzachse zu verschieben.

Grundsätzlich sind die beiden Teile des Maschinenfußes über ihre Lagerschienen nur im Bereich des stationären Formträgers 12 mittelbar über diesen miteinander verbunden. Zum Umsetzen der Maschine, wofür auch der bereits erwähnte Schwerpunkt entscheidend ist, ist es daher erforderlich, weitere Verbindungen zwischen den beiden Teilen 10a,10b des Maschinenfußes zu schaffen. Dennoch ist dann die so geschaffene Einheit als Ganzes beim Kunden bedarfsweise zu versetzen.

### Liste der Bezugszeichen (kein Bestandteil der Anmeldeunterlagen)

- 10: Maschinenfuß
- 10a,10b: Teil
- 10c,10d,10e,10f: Längswand
- 11: beweglicher Formträger
- 12: stationärer Formträger
- 12a: Fuß
- 13: Spritzgießform
- 14,15: Zentrierelemente
- 16: Lagerschiene von 10a
- 16b: Aussparung
- 17: Lagerschiene von 10b
- 17a: Bohrung
- 17b: Ausnehmung
- 18: Aufnahmeraum
- 19: Standfuß
- 20: Antriebsmotor
- 21: Pumpeneinheit
- 22,23: Befestigungsmittel
- 24: Halteelement
- s-s: Spritzachse
- F: Formschließeinheit
- S: Spritzgießeinheit
- R: Formspannraum

## Patentansprüche

1. Spritzgießmaschine zur Verarbeitung von Kunststoffen und anderen plastifizierbaren Massen mit
- einem im Betriebszustand der Maschine wenigstens zwei nebeneinanderstehende Teile (10a, 10b) aufweisenden Maschinenfuß (10),
- einer Spritzgießeinheit (S) zum Plastifizieren und Spritzgießen der plastifizierbaren Massen, die über dem einen Teil (10a) des Maschinenfuß (10) angeordnet ist,
- einer Formschließeinheit (F), die auf dem anderen Teil (10b) des Maschinenfuß (10) angeordnet ist und zwischen deren Formträger (11, 12) eine Spritzgießform (13) in einem Formspannraum (R) aufnehmbar ist, wobei der stationäre Formträger (12) an diesem anderen Teil (10b) des Maschinenfuß (10) befestigbar ist,
**dadurch gekennzeichnet, dass** die Teile (10a, 10b) des Maschinenfuß (10) unterhalb und in der Vertikalprojektion zumindest des Fußes (12a) des stationären Formträgers (12) mit diesem unabhängig voneinander verbindbar sind.

2. Spritzgießmaschine nach Anspruch 1, **dadurch gekennzeichnet, dass** die Verbindung der beiden Teile (10a, 10b) des Maschinenfuß (10) mit dem stationären Formträger (12) im wesentlichen über paarweise parallel zueinander angeordnete Zentrierelemente (14, 15) erfolgt.

3. Spritzgießmaschine nach Anspruch 2, **dadurch gekennzeichnet, dass** jedem Teil (10a, 10b) des Maschinenfuß (10) je zwei quer zur Spritzachse (s-s) angeordnete Zentrierelemente (14, 15) zugeordnet sind, die etwa über den voneinander beabstandeten Längswänden (10c, 10d; 10e, 10f) der Teile des Maschinenfuß (10) vorgesehen sind.

4. Spritzgießmaschine nach einem der Ansprüche 1-3, **dadurch gekennzeichnet, dass** der die Spritzgießeinheit (S) tragende eine Teil (10a) des Maschinenfuß (10) gegenüber dem die Formschließeinheit (F) tragenden anderen Teil (10b) schmaler ist und mit Lagerschienen (16), die den einen Teil (10a) in Richtung auf den anderen Teil (10b) überragen, am anderen Teil (10b) über den stationären Formträger (12) aufgelagert ist.

5. Spritzgießmaschine nach Anspruch 4, **dadurch gekennzeichnet, dass** die Lagerschienen (16) des einen Teils (10a) im Betriebszustand zwischen den Lagerschienen (17) des anderen Teils (10b) zu liegen kommen.

6. Spritzgießmaschine nach einem der Ansprüche 1-5, **dadurch gekennzeichnet, dass** der andere Teil (10b) des Maschinenfuß (10) mit dem stationären Formträger (12) zur Bildung einer Montageeinheit verbindbar ist, wobei zwischen dem stationären Formträger (12) und dem anderen Teil (10b) ein Aufnahmeraum (18) zum Einführen des einen Teils (10a) ausgebildet ist.

7. Spritzgießmaschine nach einem der vorhergehenden Ansprüche, **dadurch gekennzeichnet, dass** die Teile (10a,10b) des Maschinenfußes im Übergangsbereich auf gemeinsamen Standfüßen (19) des anderen Teils (10b) des Maschinenfußes (10) abgestützt sind.

8. Spritzgießmaschine nach einem der vorhergehenden Ansprüche, **dadurch gekennzeichnet, dass** der Antriebsmotor (20) von Formschließeinheit (F) und Spritzgießeinheit (S) unterhalb der Spritzgießeinheit in dem einen Teil (10a) des Maschinenfußes angeordnet ist.

9. Spritzgießmaschine nach Anspruch 8, **dadurch gekennzeichnet, dass** der Antriebsmotor (20) zwischen den Lagerschienen (16) eingehängt ist.

## Claims

1. Injection moulding machine for the processing of plastics materials and other plasticisable substances comprising
- a machine base (10) which, with the machine in the operating condition, has at least two adjacently positioned components (10a, 10b),
- an injection moulding unit (S) for the plastification and injection moulding of the plasticisable substances, which is disposed above the one component (10a) of the machine base (10),
- a mould dosing unit (F), which is disposed on the other component (10b) of the machine base (10) and between the mould carriers of which (11, 12) an injection mould (13) can be accommodated in a mould clamping area (R), the stationary mould carrier (12) being securable to this other component (10b) of the machine base (10),
**characterised in that** the components (10a, 10b) of the machine base (10) underneath and in the vertical projection of at least the foot (12a) of the stationary mould carrier (12) can be connected to this latter independently of one another.

2. Injection moulding machine according to claim 1, **characterised in that** the connection between the two components (10a, 10b) of the machine base (10) and the stationary mould carrier (12) is effected essentially via centring members (14, 15), which are disposed in pairs parallel relative to one another.

3. Injection moulding machine according to claim 2, **characterised in that** two centring members (14, 15), disposed transversely relative to the axis of injection (s-s), are allocated to each of the components (10a, 10b) of the machine base (10) and are provided substantially above the longitudinal walls (10c, 10d; 10e, 10f) of the components of the machine base (10), which walls are at a spacing from one another.

4. Injection moulding machine according to one of the claims 1-3, **characterised in that** the one component (10a) of the machine base (10) supporting the injection moulding unit (S) is narrower in comparison with the other component (10b) supporting the mould closing unit (F) and is supported on the other component (10b) above the stationary mould carrier (12) via bearing bars (16), which project the one component (10a) in the direction of the other component (10b).

5. Injection moulding machine according to claim 4, **characterised in that**, in the operating condition, the bearing bars (16) of the one component (10a) come to rest between the bearing bars (17) of the other component (10b).

6. Injection moulding machine according to one of the claims 1-5, **characterised in that** the other component (10b) of the machine base (10) can be connected to the stationary mould carrier (12) to form one assembly unit, a receiving area (18) for introduction of the one component (10a) being formed between the stationary mould carrier (12) and the other component (10b).

7. Injection moulding machine according to one of the preceding claims, **characterised in that** the components (10a, 10b) of the machine base are supported in the transition region on common feet (19) of the other component (10b) of the machine base (10).

8. Injection moulding machine according to one of the preceding claims, **characterised in that** the drive motor (20) of mould dosing unit (F) and injection moulding unit (S) is disposed underneath the injection moulding unit in the one component (10a) of the machine base.

9. Injection moulding machine according to daim 8, **characterised in that** the drive motor (20) is suspended between the bearing bars (16).

## Revendications

1. Machine à mouler par injection pour le traitement de matières plastiques et d'autres masses plastifiables comportant
- un pied de machine (10) comportant, à l'état de fonctionnement de la machine, au moins deux parties (10a, 10b) disposées côte à côte,
- une unité de moulage par injection (S) pour la plastification et le moulage par injection des masses plastifiables, laquelle est disposée au-dessus d'une partie (10a) du pied de machine (10),
- une unité de fermeture de moule (F) qui est disposée sur l'autre partie (10b) du pied de machine (10) et dont les porte-moules (11, 12) peuvent recevoir entre eux un moule d'injection (13) dans un espace de serrage de moule (R), le porte-moule fixe (12) pouvant être fixé sur cette autre partie (10b) du pied de machine (10),
**caractérisée en ce que** les parties (10a, 10b) du pied de machine (10) peuvent être reliées, au-dessous et dans la projection verticale d'au moins le pied (12a) du porte-moule fixe (12), à celui-ci, indépendamment l'une de l'autre.

2. Machine à mouler par injection selon la revendication 1, **caractérisée en ce que** la liaison des deux parties (10a, 10b) du pied de machine (10) avec le porte-moule fixe (12) s'effectue essentiellement par des éléments de centrage (14, 15) disposés deux par deux parallèlement l'un à l'autre.

3. Machine à mouler par injection selon la revendication 2, **caractérisée en ce qu'**à chaque partie (10a, 10b) du pied de machine (10) sont associés deux éléments de centrage (14, 15) disposés transversalement à l'axe d'injection (s-s), lesquels sont prévus approximativement au-dessus des parois longitudinales (10c, 10d ; 10e, 10f) espacées l'une de l'autre des parties du pied de machine (10).

4. Machine à mouler par injection selon l'une des revendications 1 à 3, **caractérisée en ce qu'**une partie (10a), portant l'unité de moulage par injection (S), du pied de machine (10) est plus étroite que l'autre partie (10b) portant l'unité de fermeture de moule (F) et est supportée, par des rails de support (16) qui dépassent d'une partie (10a) en direction de l'autre partie (10b), par l'autre partie (10b), à travers le porte-moule fixe (12).

5. Machine à mouler par injection selon la revendication 4, **caractérisée en ce que** les rails de support (16) d'une partie (10a) viennent se placer à l'état de fonctionnement entre les rails de support (17) de l'autre partie (10b).

6. Machine à mouler par injection selon l'une des revendications 1 à 5, **caractérisée en ce que** l'autre partie (10b) du pied de machine (10) peut être reliée au porte-moule fixe (12) pour former une unité de montage, un espace de réception (18) destiné à l'introduction d'une partie (10a) étant formé entre le porte-moule fixe (12) et l'autre partie (10b).

7. Machine à mouler par injection selon l'une des revendications précédentes, **caractérisée en ce que** les parties (10a, 10b) du pied de machine sont soutenues dans la zone de transition sur des pieds d'appui (19) communs de l'autre partie (10b) du pied de machine (10).

8. Machine à mouler par injection selon l'une des revendications précédentes, **caractérisée en ce que** le moteur d'entraînement (20) de I'unité de fermeture de moule (F) et de l'unité de moulage par injection (S) est disposé au-dessous de l'unité de moulage par injection dans une partie (10a) du pied de machine.

9. Machine à mouler par injection selon la revendication 8, **caractérisée en ce que** le moteur d'entraînement (20) est accroché entre les rails de support (16).
